**Europäisches Patentamt**

**European Patent Office**

**Office européen des brevets**

(11) Veröffentlichungsnummer: **0 236 534**
**A2**

## (12) EUROPÄISCHE PATENTANMELDUNG

(21) Anmeldenummer: 86103936.0

(22) Anmeldetag: 22.03.86

(51) Int. Cl.³: **G 11 B 23/033**
**G 11 B 19/04**

(30) Priorität: 06.02.86 DE 3603694

(43) Veröffentlichungstag der Anmeldung:
16.09.87 Patentblatt 87/38

(84) Benannte Vertragsstaaten:
BE CH FR GB IT LI NL

(71) Anmelder: **Dunisch, Dietrich**
**Stachgrund 3**
**D-3002 Wedemark 1(DE)**

(72) Erfinder: **Dunisch, Dietrich**
**Stachgrund 3**
**D-3002 Wedemark 1(DE)**

(74) Vertreter: **Arendt, Helmut, Dipl.-Ing.**
**Hubertusstrasse 2**
**D-3000 Hannover 1(DE)**

(54) Flexible Datenspeicherplatte mit Sicherungsschalter.

(57) Eine flexible Datenspeicherplatte ist an ihrer Schutzhülle mit einem Schreibschutzschalter, bestehend aus zwei von Hand verschiebbaren Sicherungshebeln versehen, deren Position durch Informationen an einem Hüllenausschnitt erkennbar sind. Die Schieber sind zwischen der umgeschlagenen Randleiste und der Hüllenrückseite angeordnet. Dadurch erübrigen sich zusätzliche auf die Hülle klebbare Schutzetiketten.

Fig 1

EP 0 236 534 A2

DIPL.-ING. HELMUT ARENDT

PATENTANWALT

Hubertusstr, 2 · 3000 Hannover 1

0236534

Hannover, 21.03.1986

D 375/A/T Europaanmeldung

Anmelder: Herr Dietrich Dunisch
Stachgrund 3
D-3002 Wedemark 1

## Flexible Datenspeicherplatte mit Sicherungsschalter

Die Erfindung betrifft eine flexible Datenspeicherplatte mit
einer biegeweichen , umschlagartig gestalteten Schutzhülle,
welche durch umgefaltete Randstreifen einer Schutzhüllenseite
verschlossen ist.

Für flexible Datenspeicherplatten sind z. Zt. integrierte
Schreibschutzmechanismen nicht bekannt. Es gibt weder einen
einfachen Schreibschutzschalter noch einen Schreibschutzschalter mit einem Sicherungsmechanismus. Lediglich bei biegesteifen Datenspeicherplatten, sog. Harddisc oder Micro-Disketten, ist ein in die gehäuseartige Hülle einbezogener Schieber
für den Schreibschutz bekannt. Bei keinem magnetischen Datenträger ist es z. Zt. aber möglich, einen integrierten Schreibschutzschalter in Kombination mit einem Sicherungsschalter
in wechselseitiger Funktion nachzuweisen, der weder durch
manuelle Handhabung versehentlich gelöst noch durch Laufwerkseinflüsse unbeabsichtigt umgeschalten werden kann und auch
keinen Interpretationsspielraum zwischen verschiedenen Per-

- 2 -

sonen, welche die Diskette bearbeiten, darüber offenläßt, ob diese nun gesichert ist oder nicht. Bekannt für flexible Disketten ist lediglich die Verwendung von Klebeetiketten zur Schreibschutzsicherung. Die Etiketten werden auf die Schutzhülle bzw. um eine Kante herumgreifend aufgeklebt. Die Verwendung von Schreibschutzetiketten ist nachteilig. Nach einer sehr langen Verweildauer an der Schutzhülle können beim Ablösen Beschädigungen an der Diskettenhülle entstehen. Die Kosten für den Schreibschutz sind verhältnismäßig hoch, da nach einer neuen Datenspeicherung auch ein neues Schutzetikett zur Sicherung des Datenträgers gegen unbeabsichtigtes Ab- bzw. Überspielen notwendig ist. Da die Etiketten vor dem Aufkleben getrennt aufzubewahren sind, besteht leicht die Gefahr des Verlorengehens oder des Verlegens.

Der Erfindung liegt die Aufgabe zu Grunde, eine Datenspeicherplatte nach dem Gattungsbegriff des Anspruchs 1 so auszubilden, daß ohne die Verwendung zusätzlicher, d.h. von der Diskette bzw. der Datenspeicherplatte getrennter Schutzelemente eine beliebig wiederholbare Sicherung gegen unbeabsichtigtes Beschreiben oder Überschreiben ermöglicht wird. Die erfindungsgemäße Lösung zeichnet sich dadurch aus, daß an der Schutzhülle, im aneinandergrenzenden Bereich zweier senkrecht zueinander verlaufender Randleisten eine Schalteinrichtung in Gestalt zweier streifenförmiger, von Hand parallel zu den Hüllenkanten bewegbarer Schieber zwischen den Randleisten und der Hüllenrückseite als Informationsträger angeordnet ist, deren Informationen durch Ausschnitte in den Randleisten und in den Schutzhüllenseiten sichtbar sind, wobei die Schieber mit ihren Enden unabhängig von ihrer jeweiligen Lage im Sinne einer gegenseitigen Sperrung aneinanderliegen.

Durch die in die Schutzhülle integrierte Schalteinrichtung wird eine versehentliche Schreibfreigabe ausgeschlossen, die sich bei herkömmlichen Verfahren dadurch ergeben kann, daß sich Etiketten oder ähnliche Sicherungselemente vorzeitig lösen oder verrutschen. Der Schreibschutz bleibt solange gewährleistet, bis beide Schieber in ihre entgegengesetzten Endpositionen geschoben sind. Erst dann liegt die Schreibfreigabe vor. Dadurch wird in einem bisher nicht gekannten Höchstmaß sichergestellt, daß Disketten in der täglichen Bearbeitung geschützt bleiben, denn der doppelte Sicherungsmechanismus verlangt zwei manuelle Schaltvorgänge in zwingender Folge. Das gilt sowohl für das Einschalten wie für das Ausschalten des Schreibschutzes. Keine der damit befaßten Bedienungspersonen kann sich nunmehr darauf berufen, daß sich der Schreibschutz unbeabsichtigt durch äußere mechanische Einflüsse geändert hätte. Dadurch wird eine wesentlich konsequentere Datensicherung erreicht.

Weitere Merkmale zur vorteilhaften Ausbildung des Erfindungsgegenstandes sind den Unteransprüchen zu entnehmen.

In der Zeichnung ist ein Ausführungsbeispiel rein schematisch dargestellt und nachstehend erläutert.

Es zeigen:

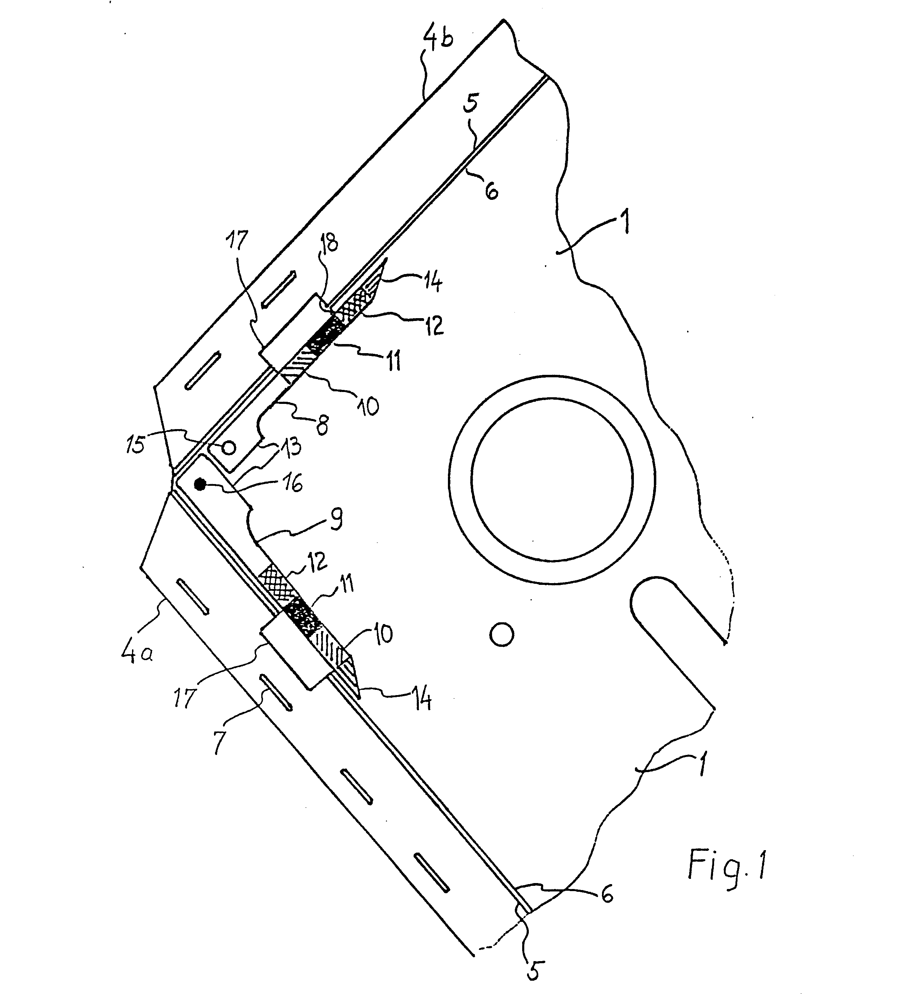

Fig. 1    einen Ausschnitt im Eckbereich einer Schutzhülle mit noch nicht verschlossenen Randleisten, jedoch mit eingelegten, die Schalteinrichtung bildenden Sicherungsschiebern,

Fig. 2    einen Ausschnitt der Schutzhülle bei geschlossenen Randleisten in der Draufsicht auf die Oberseite,

Fig. 3  die Gesamtansicht einer Schutzhülle von vorn mit
        der angedeuteten Lage der Sicherungsschieber in
        der Schreibschutzposition,

Fig. 4  die Draufsicht auf die Schutzhülle gemäß Fig. 3 mit
        der angedeuteten Lage der Sicherungsschieber in der
        Freigabepositon und

Fig. 5  zwei einzeln dargestellte Sicherungsschieber.

Die Schutzhülle 1 des dargestellten Ausführungsbeispiels besteht aus einem einteiligen Zuschnitt aus biegeweichem Material, der durch Umfalten entlang der Falzlinie 2 eine Ober-
und Unterseite bildet, zwischen welchen eine in unterbrochener Strichführung dargestellte Datenspeicherplatte 3 angeordnet ist. Die Schutzhülle wird durch an der Oberseite befindliche Randleisten 4a-4c verschlossen. Die Randleisten werden
an zwei, einen geringfügigen Abstand zueinander einhaltenden
Falzlinien 5 und 6 geknickt, umgelegt und mit der Unterseite
verschweißt. Die Schweißbereiche sind mit 7 gekennzeichnet.

Durch das Umlegen der Randleisten 4a-4c um jeweils zwei Falzlinien 5 und 6 entstehen zwischen diesen und der Unterseite
flache Hohlräume, in welche in einem Eckbereich der Schutzhülle zwei streifenförmige Sicherungsschieber 8 und 9 untergebracht sind. Sie bilden zusammen eine Schalteinrichtung zur
Sicherung bzw. zur Freigabe der Diskette zum Beschreiben bzw.
Überschreiben mit Informatinen.

Die Sicherungsschieber sind jeweils mit drei Farbkennfeldern
10 (grün), 11 (weiß) und 12 ( rot) versehen. An ihren aneinanderliegenden Enden weisen die Schieber absatzartige Verstärkungen 13 und an ihren voneinander abgekehrten Enden
durch Schrägschnitte gebildete Spitzen 14 auf. Außerdem
sind sie an ihren verstärkten Enden mit Öffnungen oder Vertiefungen bzw. Rastkerben 15 zum wechselseitigen Einrasten
einer an der Schutzhülle angeordneten Arretierungsnoppe 16
versehen. Dadurch ist eine zusätzliche Lagesicherung möglich.

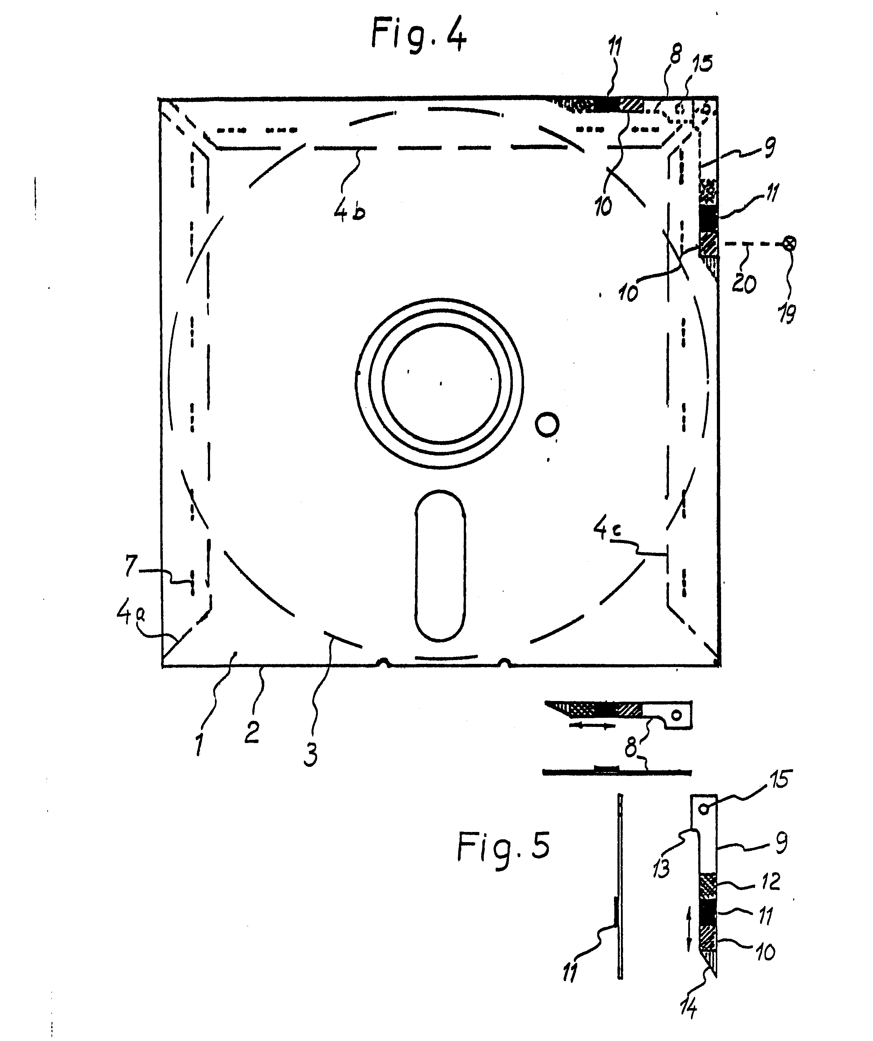

Die Sicherungsschieber sind in Längsrichtung um das Breitenmaß eines Farbkennfeldes verschiebbar. Durch Ausschnitte 17
in den Randleisten und 18 in den Schutzhüllenflächen sind
jeweils zwei Farbkennfelder sichtbar. Das grüne Farbkennfeld 10 ist lichtdurchlässig gestaltet und kann von einer
Lichtquelle 19 durchleuchtet werden. Das Durchleuchten ist
nur dann möglich, wenn der Sicherungsschieber 9 die in Fig. 4
dargestellte entsicherte Position eingenommen hat.

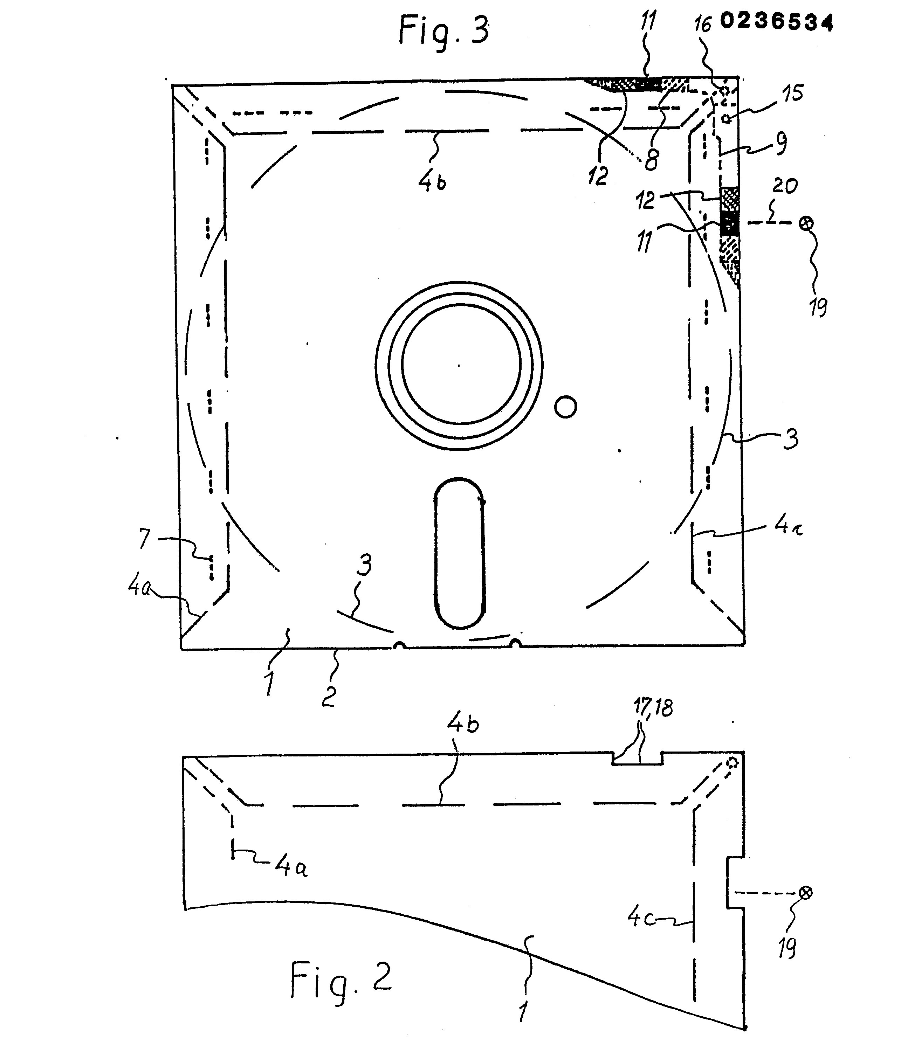

In der gesicherten Position gemäß Fig. 3 sind in den Ausschnitten 17, 18 nur die Farbkennfelder 11 und 12 sichtbar.
Das weiße bzw. einfarbige Kennfeld 11 ist lichtundurchlässig
und versperrt dem von der Lichtquelle 19 ausgehenden Lichtstrahl 20 den Durchtritt zu einer Fotozelle. Diese Position
des Sicherungsschiebers 9 kann als Ausgangsposition bezeichnet werden. Der Sicherungsschieber 8 nimmt dabei eine Position
ein, die es dem Schieber 9 verwehrt, seine Ausgangsposition
zu verlassen. In der Zeichnung Fig. 3 kann er nicht ungewollt
nach oben geschoben werden. Die Lage des Schiebers 8 ist zusätzlich durch den Eingriff der Rastnoppe 16 in die Kerbe 15
gesichert.
Sollte also die Sperrposition in Gestalt des roten Farbkennfeldes in dem Hüllenausschnitt übersehen und die Schutzhülle
mit der Diskette ordnungsgemäß in einen Computer gelegt werden, so verhindert das lichtundurchlässige Kennfeld 11 den Schaltvorgang für die Inbetriebnahme des Gerätes zum Beschreiben oder Überschreiben.

Um die Datenspeicherplatte 3 benutzen zu können, ist der Sicherungsschieber 8 aus seiner Ausgangsposition zu entfernen und der Sicherungsschieber 9 in die entstehende Lücke zwischen dem breiten Ende des Sicherungsschiebers 8 und der Schutzhüllenkante zu schieben, bis die Sicherungsnoppe 16 in die Rastkerbe bzw. -öffnung 15 einrastet und ihn in der Betriebsstellung hält. In dieser Lage sind im Schutzhüllenausschnitt das grüne Farbkennfeld 10 und das weiße Farbkennfeld 11 zu sehen. Das grüne Farbkennfeld 10 kann nun von der Lichtquelle 19 durchleuchtet und der Schreibvorgang nach dem Einlegen des Datenspeichers in einen Computer freigegeben werden.

Die Anwendung eines Schreibschutzaufklebers, wie bei flexiblen Datenspeicherplatten üblich, erübrigt sich. Laufwerksstörungen durch mangelhaft entfernte Schreibschutzaufkleber oder mangelhaft angebrachte Etiketten sind damit ausgeschlossen. Es wird eine erhöhte Betriebssicherheit erreicht. Die Inbetriebsetzung der Datenspeicherplatte zum Datenaufzeichnen wird erst nach einer zweifachen manuellen Umschaltung ermöglicht, was zu einer erhöhten Sicherheit führt. Die jeweilige Position der farblich gekennzeichneten Sicherungsschieber ist bei ordnungsgemäßer Betätigung immer mit gleicher Farbkennzeichnung zu sehen. Eine unterschiedliche Farbkennzeichnung zeigt dem Bedienungspersonal sofort eine fehlerhafte Einstellung an und zwingt zu erhöhter Aufmerksamkeit.

Hannover, 21.03.1986

D 375/A/T Europaanmeldung.

Anmelder: Herr Dietrich Dunisch
Stachgrund 3
D-3002 Wedemark 1

---

## PATENTANSPRÜCHE

1. Flexible Datenspeicherplatte mit einer biegeweichen, umschlagartig gestalteten Schutzhülle, welche durch umgefaltete Randstreifen einer Schutzhüllenseite verschlossen ist, dadurch gekennzeichnet, daß an der Schutzhülle (1) im aneinandergrenzenden Bereich zweier senkrecht zueinander verlaufender Randleisten (4b, 4c) eine Schalteinrichtung in Gestalt zweier streifenförmiger, von Hand parallel zu den Hüllenkanten bewegbarer Sicherungsschieber (8, 9) zwischen den Randleisten und der Hüllenrückseite als Informationsträger angeordnet ist, deren Informationen durch Ausschnitte (17, 18) in den Randleisten und in den Schutzhüllenseiten sichtbar sind, wobei die Sicherungsschieber mit ihren Enden unabhängig von ihrer jeweiligen Lage im Sinne einer gegenseitigen Sperrung aneinanderliegen.

2. Datenspeicherplatte nach Anspruch 1, dadurch gekennzeichnet, daß die Sicherungsschieber (8, 9) zusätzlich mit Rast-

- 2 -

kerben bzw. -öffnungen (15) zum wechselweisen Eingriff einer an der Schutzhülle angebrachten Arretierungsnoppe (16) versehen sind.

3. Datenspeicherplatte nach den Ansprüchen 1 und/oder 2, dadurch gekennzeichnet, daß einer der Sicherungsschieber als Schaltorgan mit einem abgegrenzten lichtdurchlässigen Bereich (10) zum Einleiten eines Schaltvorganges für das Inbetriebsetzen des Schreibvorganges eines Diskettenlaufwerkes versehen ist.

4. Datenspeicherplatte nach einem oder mehreren der Ansprüche 1 bis 3, dadurch gekennzeichnet, daß die Sicherungsschieber jeweils mit drei nebeneinander angeordneten Farbkennfeldern (11, 12, 13) versehen sind, wobei das mittlere Farbkennfeld des als Sicherungsschalter dienenden Schiebers (9) lichtundurchlässig und ein weiteres als lichtdurchlässiger Bereich ausgebildet ist.

5. Datenspeicherplatte nach einem oder mehreren der Ansprüche 1 bis 4, dadurch gekennzeichnet, daß die Farbkennfelder beider Schieber im Sinne einer synchronen Farbanzeige angeordnet sind.

Fig.1

## Fig. 3

## Fig. 2

# Fig. 4

# Fig. 5